# EUROPEAN PATENT SPECIFICATION

(11) **EP 1 662 182 B1**
(45) Date of publication and mention of the grant of the patent: **24.10.2007**
(21) Application number: 04425882.0
(22) Date of filing: 25.11.2004
(51) Int. Cl.: F16H 61/00, F16H 55/56

(54) **Continuously variable transmission system, particularly for motor-vehicles**
Stufenloses Getriebe für Motor-Fahrzeuge
Transmission à variation continue pour vehicules

(43) Date of publication of application: 31.05.2006
(73) Proprietor: C.R.F. SOCIETA' CONSORTILE PER AZIONI, 10043 Orbassano (TO) (IT)
(72) Inventor: Mesiti, Domenico, 10043 Orbassano (Torino) (IT); Dzida, Jan, 10043 Orbassano (Torino) (IT); Baldascini, Filippo, 10043 Orbassano (Torino) (IT)
(74) Representative: Quinterno, Giuseppe

(56) References cited:
- EP-A- 0 558 002
- WO-A-03/048612
- DE-A1- 2 715 758

## Description

The present invention relates to a continuously variable transmission system, particularly for motor-vehicles, according to the preamble of claim 1 and as disclosed in EP 0 558 002 A.

More specifically, the invention concerns a continuously variable transmission system comprising an input shaft and an output shaft, essentially parallel with each other and provided with respective axially-expandable pulleys, coupled with one another by a belt; said pulleys comprising respective conical discs which rotate together with and which are slidable with respect to the respective shaft, and are disposed on opposite sides with respect to the belt; the movable conical disc coupled to the input shaft having an associated centrifugal mechanism for controlling the axial position thereof, said mechanism comprising a plurality of masses which are interposed between said conical disc and a contrast plate which is axially fixed with respect to the input shaft, said masses being radially displaceable under the effect of the centrifugal force.

Continuously variable transmission systems of this kind are in use since many decades.

Already in the Fifties of the past century such continuously variable transmission systems where used, for instance in the scooters of the model "Hobby" manufactured by DKW, in the motor-cycles of the model "Tina" manufactured by Triumph, and on the motor-cycles of the model "Ciao" manufactured by Piaggio. In said systems, which are structurally very simple, the displacement of the disc members of the input pulley was determined by a centrifugal mechanism, whereas the disc members of the output pulley where displaced towards each other by means of a spring. With said systems the obtainable transmission ratio and the capability of transferring torque were merely dependent on the speed of rotation of the input pulleys.

Subsequently, more complex systems ,have been proposed ("Variomatic" system manufactured by Daf), in which the disc members of the output pulleys were moved one towards the other by means of a centrifugal mechanism and a pneumatic diaphragm actuator. In these kinds of systems the transmission ratios and the transferred torque could be controlled by acting onto two parameters, and this allowed to achieve better efficiencies.

Later on transmissions have been proposed in which the input pulley was controlled by means of hydraulic thrust systems. Examples of such systems are disclosed for instance in SAE Technical Papers Nos. 930666-930668, and in ATZ, Automobil-Technische Zeitschrift 102 (2000), 7/8. The transmissions provided with such hydraulic thrust systems allow a high accuracy of control of the transmission ratio and of the compression force exerted on the trapezoid belt with respect to the transmitted torque. However, these transmissions have an excessive cost, due to the complicate structure and the need of using at least one pump and hydraulic actuators, as well as electrovalves and an associated electronic control system. The overall efficiency of such transmissions is furthermore decreased, due to the power needed for driving the hydraulic pump.

Continuously variable transmissions having a mechanical-electronic control system of the transmission ratio are also known. An example of such a system is disclosed in JSAE Review 17 (1996). In that solution an electric motor is used, which through a three-stage gear reduction unit, a threaded coupling and a ball-baring, is capable of axially displacing a disc member of the input pulley, thus causing a variation of the transmission ratio. Such a system has the advantage of allowing the control to be performed electrically-electronically, and furthermore it has a lower consumption of energy with respect to the hydraulic solutions. However, said system is rather complicate and bulky.

An aim of the present invention is to propose a continuously variable transmission (CVT) system of the initially defined kind, which allows to achieve an operation and performances similar to those of the best present solutions, however with a by far simplified structure and an extremely low manufacturing cost, and in which the variation of the transmission ratio is achieved with a minimum consumption of electric energy through the exploitation of the action of centrifugal masses.

This and other aims are achieved according to the invention by a continuously variable transmission system of the aforesaid kind, characterised in that the said contrast plate is mounted rotatable about the input shaft, and electric motor means are associated to said plate so as to cause the relative rotation thereof at a variable speed with respect to the input shaft.

Further characteristics and advantages of the invention will become apparent from the detailed description which follows, as a non-limiting example, with reference to the attached drawings, in which:
figure 1 is a schematic diagram of a continuously variable transmission CVT according to the present invention;
figure 2a to 2d are schematic diagrams which show different conditions of operation of a centrifugal mass of a centrifugal control mechanism comprised in the transmission according to figure 1;
figure 3 is an axial cross-sectional view of an embodiment of a transmission in accordance with the diagram of figure 1;
figure 4 is a schematic illustration of another continuously variable transmission according to the present invention;
figure 5 is a schematic illustration of one further continuously variable transmission according to the present invention;
figures 6a to 6d show different operating conditions of a sphere belonging to a centrifugal control mechanism comprised in the transmission according to figure 5; and
figure 7 is a schematic illustration of another variant of a continuously variable transmission according to the present invention.

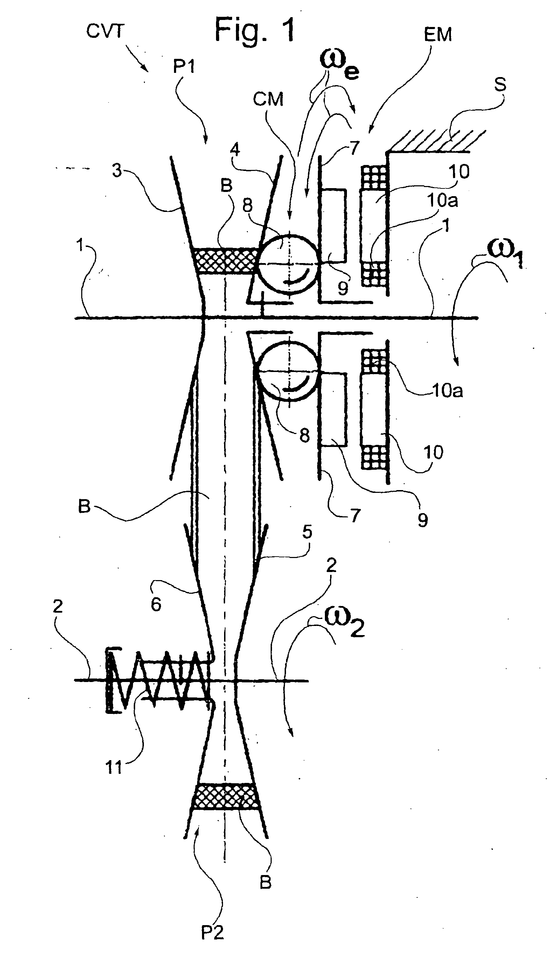

In figure 1 a continuously variable transmission in accordance with the present invention is indicated as a whole as CVT.

This transmission comprises an input shaft 1 and an output shaft 2 on which respective axially expandable pulleys P1 and P2 are mounted so as to rotate together with said shafts, said pulleys being coupled with each other by a belt B having for instance a trapezoid cross-section.

In the illustrated embodiment the pulleys P1 and P2 comprise respective conical discs 3 and 5, which are fixed to the shafts 1 and 2 respectively, and which are thus axially and rotatably in one piece with said shafts, and respective conical discs 4 and 6 which rotate together with said shafts 1 and 2 and which are axially translatable with respect thereto.

The axially slidable conical discs 4 and 6, as well as the fixed conical discs 3 and 5, are disposed on opposite sides with respect to the belt.

A centrifugal mechanism CM is associated to the slidable conical disc 4 of pulley P1 to control the axial position thereof. In a per se known manner this mechanism comprises a plurality of centrifugal masses 8 which are interposed between said conical disc 4 and a contrast plate 7 which is axially fixed with respect to the input shaft 1 though being rotatable about the latter.

In a per se known manner, the spheres 8 of the mechanism CM are capable, in the operation to be displaced radially towards the outside under the effect of the centrifugal force and to cause thus a displacement of the slidable conical disc 4 towards the disc 3 which is fixed to the shaft 1, and a corresponding radial displacement toward the outside of the portion of the belt B which is engaged in the input pulley P1. As a consequence, a corresponding radial displacement toward the inside is caused onto the portion of the belt B which engages the output pulley P2, and a corresponding variation of the transmission ratio is determined between the input shaft 1 and the output shaft 2.

In the transmission CVT according to the invention illustrated in figure 1 the rotatable plate 7 represents part of the rotor of an electric control motor indicated as a whole by EM. To the surface of the plate 7 which faces away from pulley P1 there is fixed a distribution of permanent magnets 9 (rotor magnets), which face stator cores 10 provided with corresponding stator windings or coils 10a.

A spring 11 is coupled to the slidable disc 6 of the output pulley P2, and tends to push said conical disc towards the conical disc 5 which is fixed to the shaft 2, and through its pushing force establishes the torque which can be transmitted.

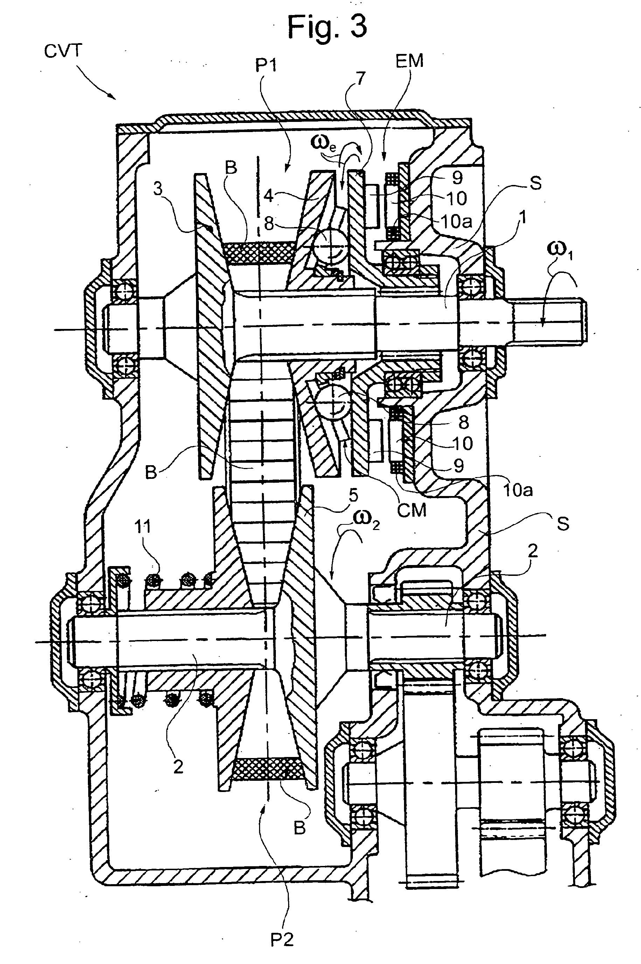

The stator 10, 10a of the electric motor EM in the transmission according to figure 1 is fastened to a fixed structure S, such as for instance a portion of the housing which envelopes the transmission (see also figure 3).

The electric motor EM can be controlled in such a way as to cause, whenever necessary, a rotation of the plate 7 with respect to the input shaft 1, and this occurs at an angular speed and in the direction of rotation which are predetermined by an electronic control unit (not illustrated in the drawings), which is coupled to the transmission CVT.

In the drawings ω₁ indicates the angular speed of the input shaft 1 of the transmission, and ωₑ indicates the relative angular speed of the rotor plate 7, 9 with respect to the stator 10, 10a of the electric motor EM.

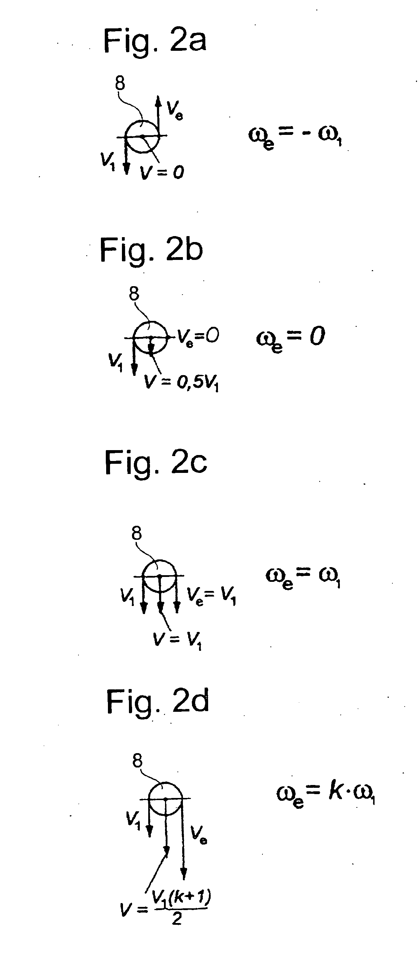

In figures 2a to 2d V₁ and Vₑ indicate the tangential speeds of diametrically opposed points of the surface of a sphere 8 of the centrifugal mechanism CM, which speeds are due to the angular speed ω₁ and ωₑ. Furthermore, V indicates the resulting tangential speed of the center of a given sphere 8.

Figures 2a-2d diagrammatically show the values of V₁, Vₑ and V corresponding to four different values of the relative angular speed ωₑ of the rotor portion of motor EM with respect to the angular speed ω₁ of the input shaft 1.

In figure 2a there is shown the situation which occurs (in first approximation) when ωₑ is essentially equal to -ω₁. In such a situation the tangential speeds of the points of contact of a given sphere 8 with the disc 4 and the plate 7 are essentially equal in magnitude and opposed in direction, and the tangential speed V of the center of the sphere is essentially equal to zero.

With reference to figure 2b, when the rotor portion of the electric motor EM is angularly at rest, namely when ωₑ is substantially equal to zero, the resulting tangential speed of the center of a given sphere is essentially equal to 0.5 V₁.

Figure 2c relates to the situation in which ωₑ is substantially equal in magnitude and in direction to the speed ω₁ of the input shaft 1. In that situation the resulting tangential speed V of the center of a given sphere 8 is essentially equal to V₁.

Finally, referring to figure 2d, when ωₑ is equal to kω₁, the speed V of the center of a generic sphere 8 is essentially equal to 0.5 V₁(k+1).

The examples of situations illustrated above with reference to figures 2a to 2d allow to appreciate that, for a given speed ω₁ of the input shaft 1, by varying the energisation of the stator of the electric motor EM it is possible to cause a variation of the resultant tangential speed of the spheres 8 of the centrifugal mechanism CM, and thus cause a corresponding variation of the distance between the conical discs 4 and 3 of the driving pulley P1 and, consequently, a variation of the actual transmission ratio.

The transmission according to figure 1 is conveniently constructed such that the transmission ratio is normally determined only by the centrifugal mechanism CM and the simultaneous action of the contrast spring 11, without the intervention of the electric motor EM. The latter is activated by an associated electronic control unit merely to "correct", when needed or convenient, the actual transmission ratio.

In the operation, when the electric motor EM is not activated, the rotor plate 7 can be maintained essentially at rest (ωₑ=0) by the residual magnetism of the stator 10 so that in such a situation the angular speed of the spheres 8 of the centrifugal mechanism is essentially equal to 0.5 ω₁.

In figure 3 there is shown a practical construction of a continuously variable transmission CVT according to the diagram of figure 1.

The embodiment of figure 3 (namely the diagram according to figure 1) has the advantage of a great structural simplicity. Moreover, since the stator of the electric motor EM is fixed with respect to the bearing structure S, the supply of current to the stator winding 10a is particularly simple, no slip rings and associated brushes being necessary to that end.

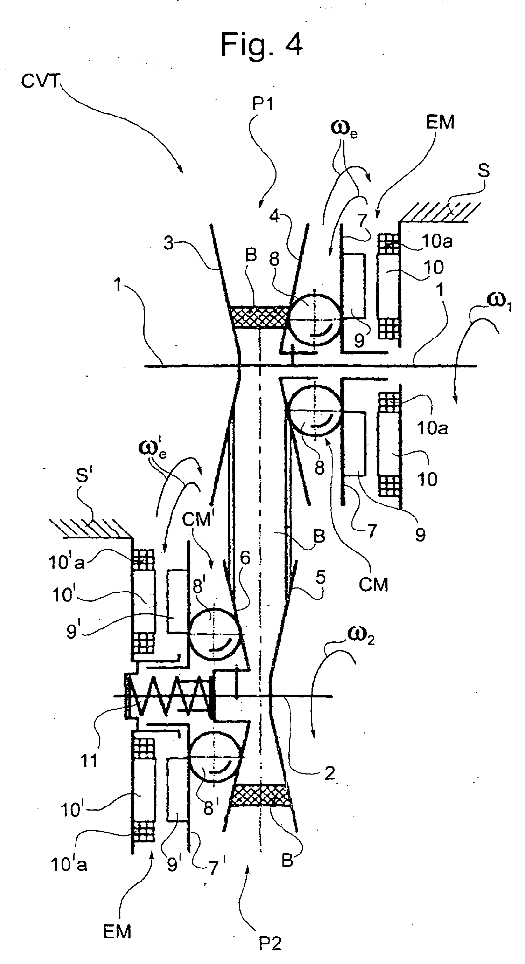

In figure 4 there is diagrammatically shown another embodiment of a continuously variable transmission CVT according to the invention. In that figure, parts and components which have already been described have once again been indicated by using the same alphabetic/numerical symbols.

In the variant according to figure 4, a respective centrifugal mechanism for controlling the axial position of the slidable conical disc is associated with each of the pulleys P1 and P2 (the torque which can be transmitted is determined by the pushing force exerted by the spring coaxial with the secondary or output shaft). Furthermore, an electric motor similar to that already described in connection with pulley P1 is associated to the slidable conical disc 6 of the output pulley P2, for the electric correction of the speed of rotation of the spheres of the relevant centrifugal mechanism.

In figure 4 the centrifugal mechanism and the electric motor which are associated to the output pulley P2, and the relevant components, have been indicated by using the same alphabetic/numeric symbols used in connection with the corresponding devices and components relevant to pulley P1, however with the addition of an apex.

The solution according to figure 4 allows a free control of the pressure force acting on the belt, which renders it possible to reduce the wastes caused by friction and improves the efficiency of the transmission.

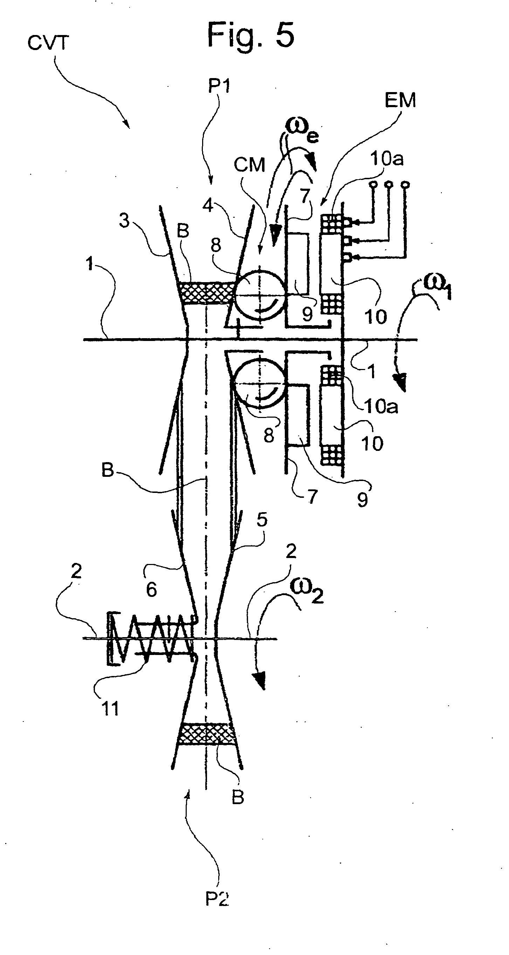

In figure 5 there is shown a further variant of embodiment of the transmission according to figure 1.

While in the transmission according to figure 1 the stator portion of the electric motor EM which is associated to the input pulley P1 is fixed, in the variant according to figure 5 the stator portion is instead axially and rotationally solid with the input shaft 1. In the operation the stator portion 10-10a of motor EM of figure 5 rotates thus at the same angular speed ω₁ of the input shaft. The energisation of the electric motor EM allows then to modulate the relative angular speed ωₑ of the rotor portion 7, 9 with respect to the speed ω₁ of the input shaft. The control of the centrifugal forces acting on the spheres 8 of the mechanism CM can thus be performed with a lower consumption of electric energy, and moreover, the average speed of rotation of the spheres 8 is increased, and this makes possible to decrease their mass.

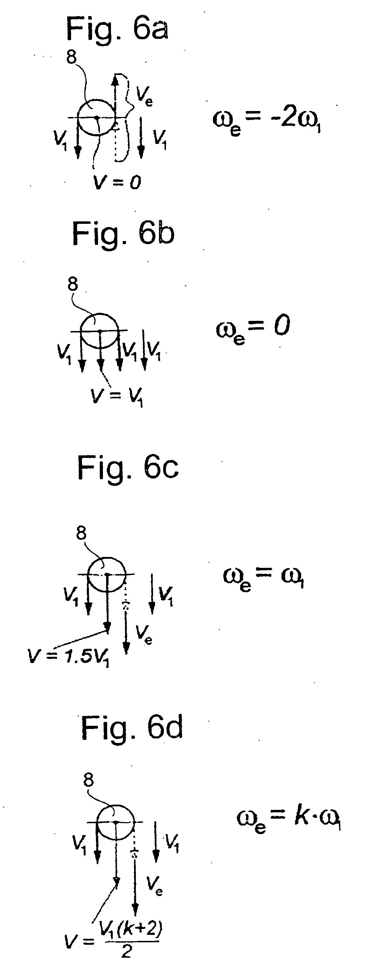

In figure 6a to 6d there are shown four different operating situations corresponding to different values of the relative angular speed of ωₑ of the rotor portion of the motor EM. It can be seen in particular that when ωₑ is substantially equal to zero (figure 6b) the resultant tangential speed V of the spheres is now substantially equal to V₁, i.e. it is doubled with respect to the corresponding condition of the CVT transmission of figure 1 (figure 2b).

In the variant according to figures 5 it is however necessary to use brushes and slip rings to allow the energisation of the windings of the stator 10, 10a. Moreover there is an increase of the overall moment of inertia of shaft 1, due to the fact that said shaft is now in one piece with the stator portion of the motor EM.

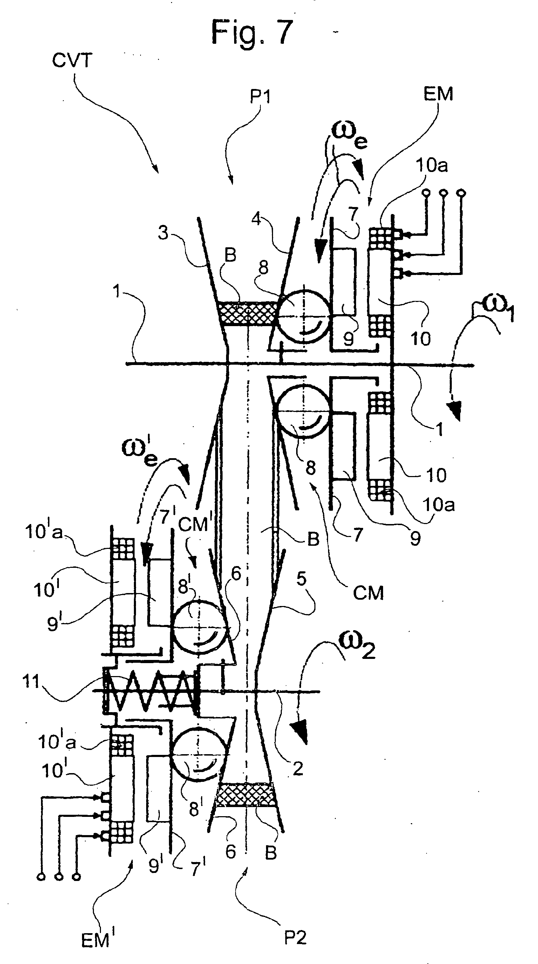

In figures 7 there is diagrammatically shown one further variant of embodiment. Also in said figure parts and components which have already been previously described have been attributed once again the same alphabetic/numeric references.

In summary, the variant of embodiment shown in figure 7 corresponds to that according to figure 5 as far as the control arrangement of the input pulley P1 is concerned, said arrangement comprising a centrifugal mechanism CM and an associated electric motor EM with a stator portion 10, 10a which rotates together with the input shaft 1. In the variant according to figure 7 a similar arrangement is also associated with the output pulley P2. Besides the spring which determines the value of the torque which can be transmitted, the control arrangement for that pulley comprises thus a centrifugal mechanism CM' with spheres 8' and a corresponding electric motor EM' having a stator portion 10', 10a', which is axially and angularly solid with the output shaft 2.

The way of operation of the continuously variable transmission according to figure 7 can be intuitively understood and therefore it will not be further described.

As a whole, the continuously variable transmissions according to the present invention are essentially characterised in that normally they operate like the simplest conventional transmissions having a centrifugal mechanism. A novel feature of the solutions according to the invention is the implementation of a relative simple electro-mechanical control system which allows to increase or decrease the angular speed of the masses (spheres) of the centrifugal mechanism(s) when a modification of the characteristics of operation of the transmission is needed.

Naturally, the principle of the invention remaining the same, the details of construction and the forms of embodiment may be varied widely with respect to those described and illustrated merely by way of example, without thereby departing from the scope of the present invention as defined in the annexed claims.

In particular, in all the above disclosed arrangements the electric motor or motors could be traditional "cylindrical" motors.

## Claims

1. A continuously variable transmission system (CVT), particularly for motor-vehicles, comprising an input shaft (1) and an output shaft (2) which are essentially parallel with each other and are provided with respective axially expandable pulleys (P1, P2) coupled with each other by a belt (B), said pulleys (P1, P2) comprising respective conical discs (4, 6) which are angularly solid with and axially slidable with respect to the corresponding shafts (1, 2) and are disposed on opposite sides with respect to the belt (B); the slidable conical disc (4) of the input shaft (1) having an associated centrifugal mechanism (CM; 8) for controlling the axial position of said conical disc (4), said mechanism comprising a plurality of centrifugal masses (8), particularly spheres, which are interposed between said conical disc (4) and a contrast plate (7) which is axially fixed with respect to the input shaft (1), and which are radially movable under the effect of the centrifugal force;
the system being **characterised in that** said contrast plate (7) is mounted rotatable about said input shaft (1) and **in that** to said plate (7) there are associated electric motor means (EM) capable of causing a relative rotation thereof at a variable speed with respect to the input shaft (1).

2. A continuously variable transmission system according to claim 1, wherein also to the slidable conical disc (6) of the pulley (P2) of the output shaft (2) there is associated a centrifugal mechanism (CM') for controlling the axial position of said conical disc (6), this mechanism comprising a plurality of masses (8'), which are interposed between said conical disc (6) and a further contrast plate (7') which is axially fixed with respect to the output shaft (2), and which are radially movable under the effect of the centrifugal force; to said further contrast plate (7'), which is rotatable about the output shaft (2), there being associated further electric motor means (EM') capable of causing a relative rotation thereof at a variable speed with respect to the output shaft (2).

3. A continuously variable transmission system according to claim 1 or 2, wherein said electric motor means (EM; EM') comprise rotor permanent magnets (9; 9') fixed to the or each contrast plate (7; 7') and an axially fixed stator (10, 10a; 10', 10a').

4. A continuously variable transmission system according to claim 3, wherein the or each stator (10, 10a; 10', 10a') is solid with a fixed support structure (S) in which the corresponding transmission shaft (1; 2) is mounted for rotation.

5. A continuously variable transmission system according to any of claims 1 to 3, wherein the electric motor means (EM; EM') comprise a stator (10, 10a; 10', 10a') which is fixed for rotation with respect to the corresponding shaft of the transmission (1; 2).

6. A continuously variable transmission system according to any of the preceding claims, wherein resilient means (11) are associated to the slidable conical disc (6) of the pulley (P2) of the output shaft (2), said resilient means (11) tending to push said slidable conical disc (6) toward the other conical disc (5) of the same pulley (P2).

## Patentansprüche

1. Stufenloses Getriebe (CVT) insbesondere für Kraftfahrzeuge, umfassend eine Eingangswelle (1) und eine Abtriebswelle (2), die im Wesentlichen parallel zueinander liegen und jeweils mit axial dehnbaren Riemenscheiben (P1, P2) versehen sind, die durch einen Riemen (B) miteinander gekoppelt sind, wobei die Riemenscheiben (P1, P2) jeweils konische Scheiben (4, 6) umfassen, die in Bezug auf die entsprechenden Wellen (1, 2) winkelstabil und axial verschiebbar sind und in Bezug auf den Riemen (B) an gegenüberliegenden Seiten angeordnet sind; wobei die verschiebbare konische Scheibe (4) der Eingangswelle (1) einen dazugehörigen Zentrifugalmechanismus (CM; 8) zum Steuern der axialen Position der konischen Scheibe (4) aufweist, wobei der Mechanismus eine Mehrzahl von Schwungmassen (8), insbesondere Kugeln, umfasst, welche zwischen der konischen Scheibe (4) und einer in Bezug auf die Eingangswelle (1) axial befestigten Gegenplatte (7) eingeschoben sind und unter der Wirkung der Fliehkraft radial beweglich sind;
wobei das System **dadurch gekennzeichnet ist, dass** die Gegenplatte (7) um die Eingangswelle (1) herum drehbar montiert ist und dass elektrische Motormittel (EM) mit dieser Platte (7) verbunden sind, welche imstande sind, eine relative Drehung der letzteren in Bezug auf die Eingangswelle (1) bei variabler Geschwindigkeit hervorzurufen.

2. Stufenloses Getriebe gemäß Anspruch 1, wobei ein Zentrifugalmechanismus (CM') zum Steuern der axialen Position der konischen Scheibe (6) auch mit der verschiebbaren konischen Scheibe (6) der Riemenscheibe (P2) der Abtriebswelle (2) verbunden ist, wobei dieser Mechanismus eine Mehrzahl von Massen (8') umfasst, die zwischen der konischen Scheibe (6) und einer weiteren, in Bezug auf die Abtriebswelle (2) axial befestigten Gegenplatte (7') eingeschoben sind und unter der Wirkung der Fliehkraft radial beweglich sind; wobei weitere elektrische Motormittel (EM') mit dieser weiteren, um die Abtriebswelle (2) drehbaren Gegenplatte (7') verbunden sind, welche imstande sind, eine relative Drehung der letzteren in Bezug auf die Abtriebswelle (2) bei variabler Geschwindigkeit hervorzurufen.

3. Stufenloses Getriebe gemäß Anspruch 1 oder 2, wobei die elektrischen Motormittel (EM; EM') Rotor-Dauermagnete (9; 9'), die an der oder jeder Gegenplatte (7; 7') befestigt sind, und einen axial fixierten Stator (10, 10a; 10', 10a') umfassen.

4. Stufenloses Getriebe gemäß Anspruch 3, wobei der oder jeder Stator (10, 10a; 10', 10a') an einer feststehenden Stützstruktur (S) befestigt ist, in welcher die entsprechende Getriebewelle (1; 2) zur Rotation montiert ist.

5. Stufenloses Getriebe gemäß einem der Ansprüche 1 bis 3, wobei die elektrischen Motormittel (EM; EM') einen Stator (10, 10a; 10', l0a') umfassen, der zur Drehung in Bezug auf die entsprechende Welle des Getriebes (1; 2) befestigt ist.

6. Stufenloses Getriebe gemäß einem der vorhergehenden Ansprüche, wobei der verschiebbaren konischen Scheibe (6) der Riemenscheibe (P2) der Abtriebswelle (2) elastische Mittel (11) zugeordnet sind, wobei diese elastischen Mittel (11) dazu neigen, die verschiebbare konische Scheibe (6) zur anderen konischen Scheibe (5) derselben Riemenscheibe (P2) zu drücken.

## Revendications

1. Système de transmission à variation continue (CVT), particulièrement pour des véhicules à moteur, comprenant un arbre d'entrée (1) et un arbre de sortie (2) qui sont essentiellement parallèles l'un à l'autre et qui sont pourvus de poulies (P1, P2) respectives pouvant être élargies axialement couplées l'une à l'autre par une courroie (B), lesdites poulies (P1, P2) comprenant des disques coniques (4, 6) respectifs qui sont angulairement d'un seul tenant avec les arbres (1, 2) correspondant et qui peuvent coulisser axialement par rapport à ceux-ci et qui sont disposés sur des côtés opposés par rapport à la courroie (B) ; le disque conique (4) coulissant de l'arbre d'entrée (1) ayant un mécanisme centrifuge (CM ; 8) associé pour commander la position axiale dudit disque conique (4), ledit mécanisme comprenant une pluralité de masses centrifuges (8), particulièrement des sphères, qui sont interposées entre ledit disque conique (4) et une plaque (7) opposée qui est fixe axialement par rapport à l'arbre d'entrée (1), et qui sont mobiles radialement sous l'effet de la force centrifuge ;
le système étant **caractérisé en ce que** ladite plaque (7) opposée est montée en rotation autour dudit arbre d'entrée (1) et **en ce que** des moyens formant moteur électrique (EM) capables de provoquer une rotation relative de ladite plaque (7) à une vitesse variable par rapport à l'arbre d'entrée (1) sont associés à celle-ci.

2. Système de transmission à variation continue selon la revendication 1, dans lequel un mécanisme centrifuge (CM') est également associé au disque conique (6) coulissant de la poulie (P2) de l'arbre de sortie (2) pour commander la position axiale dudit disque conique (6), ce mécanisme comprenant une pluralité de masses (8'), qui sont interposées entre ledit disque conique (6) et une autre plaque (7') opposée qui est fixe axialement par rapport à l'arbre de sortie (2), et qui sont mobiles radialement sous l'effet de la force centrifuge ; d'autres moyens formant moteur électrique (EM') capables de provoquer une rotation relative de ladite autre plaque (7') opposée, qui est capable de tourner autour de l'arbre de sortie (2), à une vitesse variable par rapport à l'arbre de sortie (2) étant associés à celle-ci.

3. Système de transmission à variation continue selon la revendication 1 ou 2, dans lequel lesdits moyens formant moteur électrique (EM ; EM') comprennent des aimants permanents de rotor (9 ; 9') fixés à ladite ou à chaque plaque (7 ; 7') opposée et un stator fixe axialement (10, 10a ; 10', 10a').

4. Système de transmission à variation continue selon la revendication 3, dans lequel ledit ou chaque stator (10, 10a ; 10', 10a') est d'un seul tenant avec une structure de support (S) fixe dans laquelle l'arbre de transmission (1 ; 2) correspondant est monté en rotation.

5. Système de transmission à variation continue selon l'une quelconque des revendications 1 à 3, dans lequel les moyens formant moteur électrique (EM ; EM') comprennent un stator (10, 10a ; 10', 10a') qui est fixé pour tourner par rapport à l'arbre de transmission (1 ; 2) correspondant.

6. Système de transmission à variation continue selon l'une quelconque des revendications précédentes, dans lequel des moyens élastiques (11) sont associés au disque conique (6) coulissant de la poulie (P2) de l'arbre de sortie (2), lesdits moyens élastiques (11) tendant à pousser ledit disque conique (6) coulissant vers l'autre disque conique (5) de la même poulie (P2).
